(19) Europäisches Patentamt / European Patent Office / Office européen des brevets

(11) **EP 3 272 496 B1**

(12) **FASCICULE DE BREVET EUROPEEN**

(45) Date de publication et mention
de la délivrance du brevet:
**26.06.2019 Bulletin 2019/26**

(21) Numéro de dépôt: **17305964.3**

(22) Date de dépôt: **20.07.2017**

(51) Int Cl.:
*B29C 49/48* *(2006.01)*    *B29C 49/06* *(2006.01)*
*B29C 49/42* *(2006.01)*    *B29C 49/54* *(2006.01)*
*B29C 49/78* *(2006.01)*    *B29K 67/00* *(2006.01)*
*B29L 31/00* *(2006.01)*

(54) **UNITE DE MOULAGE DE RECIPIENTS, EQUIPEE D'UN DISPOSITIF DE BOXAGE A COMPACITE ACCRUE**

SPRITZGUSSEINHEIT FÜR BEHÄLTER, DIE MIT EINER BOXENHERSTELLUNGSVORRICHTUNG MIT VERBESSERTER KOMPAKTHEIT AUSGESTATTET IST

CONTAINER MOULDING UNIT PROVIDED WITH A BOXING DEVICE HAVING INCREASED COMPACTNESS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.07.2016 FR 1656949**

(43) Date de publication de la demande:
**24.01.2018 Bulletin 2018/04**

(73) Titulaire: **Sidel Participations**
**76930 Octeville-sur-Mer (FR)**

(72) Inventeur: **DERRIEN, Mikaël**
**76930 Octeville-sur-mer (FR)**

(74) Mandataire: **Siloret, Patrick**
**Sidel Participations**
**Avenue de la Patrouille de France**
**CS60627 Octeville-sur-mer**
**76059 Le Havre Cedex (FR)**

(56) Documents cités:
**WO-A1-2005/110861    US-A1- 2011 298 162**
**US-A1- 2015 239 169    US-B2- 9 061 458**

# EP 3 272 496 B1

**Description**

L'invention a trait au formage des récipients, notamment des bouteilles, des flacons ou encore des bidons, à partir d'ébauches en matière thermoplastique (tel que le polytéréphtalate d'éthylène ou PET), et plus précisément au formage des récipients munis de réserves en creux telles que des poignées intégrées.

Rappelons que la fabrication des récipients comprend généralement une opération de soufflage qui se déroule dans un moule dont la paroi définit une cavité au sein de laquelle est introduite l'ébauche, cette dernière venant, au cours du soufflage, épouser la paroi sous l'effet de la pression gazeuse élevée qui règne dans l'ébauche, préalablement chauffée de manière à permettre sa déformation plastique.

Certains récipients peuvent être munis de réserves formées en creux vers l'intérieur du récipient et réalisées dans un but esthétique (par ex. création de galbes) ou fonctionnel (réalisation d'une poignée de préhension du récipient).

Pour y parvenir, on emploie généralement une unité de moulage munie d'un insert mobile initialement escamoté dans la paroi du moule et déployé en présence du récipient en cours de formation dans le moule pour repousser la matière lorsque celle-ci atteint la paroi, comme illustré dans la demande internationale WO 2010/063900 (Sidel Participations).

La technique décrite dans ce document, conçue pour un moule de type linéaire (qui comprend deux demi-moules montés en translation l'un par rapport à l'autre), est difficilement transposable aux moules de type portefeuille (dans lequel les demi-moules sont montés en rotation l'un par rapport à l'autre), en raison de l'encombrement important, notamment radial, du dispositif de boxage commandant le mouvement de l'insert.

Un objectif est de proposer une unité de moulage de récipients munis d'une réserve en creux, offrant une meilleure compacité.

A cet effet, il est proposé une unité de moulage pour le formage d'un récipient muni d'une réserve en creux vers l'intérieur du récipient, cette unité de moulage comprenant :

-  un moule muni d'une paroi latérale définissant une cavité à l'empreinte d'au moins une partie du récipient et qui s'étend suivant un axe principal définissant une direction verticale, cette paroi latérale étant pourvue d'un logement débouchant dans la cavité ;
-  un dispositif de boxage comprenant :

  ◦ un insert monté en translation par rapport à la paroi latérale suivant un axe transversal entre une position rétractée dans laquelle l'insert est au moins en partie escamoté dans le logement, et une position déployée dans laquelle l'insert fait au moins en partie saillie dans la cavité hors du logement,
  ◦ un actionneur solidaire de l'insert et muni d'un piston ;

cette unité de moulage étant caractérisée en ce que :

-  le logement est formé en creux dans une excroissance formant une saillie vers l'intérieur de la cavité,
-  en position déployée, l'insert forme, au-delà de l'excroissance, une saillie dont l'extension transversale, notée $E$, est inférieure ou égale à 85% de l'extension transversale cumulée, notée $F$, de l'excroissance et de l'insert :

$$E \leq 0{,}85 \cdot F$$

Comme la réserve est partiellement formée par une partie fixe du moule (l'excroissance), il est possible de limiter la course de l'insert, au bénéfice de l'encombrement radial du moule.

Diverses caractéristiques supplémentaires peuvent être prévues, seules ou en combinaison. Ainsi, par exemple :

-  la course, notée $H$, de l'insert, mesurée entre sa position rétractée et sa position déployée, est inférieure ou égale à 20 mm :

$$H \leq 20 \; mm$$

-  l'extension $E$ transversale de la saillie formée par l'insert au-delà de l'excroissance est supérieure ou égale à 30% de l'extension $F$ transversale cumulée de l'excroissance et de l'insert :

$$E \geq 0.3 \cdot F$$

- la longueur de corde, notée B, mesurée dans un plan horizontal contenant l'axe transversal, de la saillie formée par l'insert en position déployée, est inférieure ou égale à 80% de la longueur de corde cumulée, notée A, de l'excroissance et de la saillie formée par l'insert en position déployée :

$$B \leq 0.8 \cdot A$$

- la longueur de corde, notée B, mesurée dans un plan horizontal contenant l'axe transversal, de la saillie formée par l'insert en position déployée, est supérieure ou égale à 35% de la longueur A de corde cumulée de l'excroissance (10) et de la saillie formée par l'insert (12) en position déployée :

$$B \geq 0.35 \cdot A$$

- l'insert présente une largeur C, mesurée horizontalement, dont le rapport à la longueur de corde B est inférieur ou égal à 2,3 :

$$B \leq 2.3 \cdot C$$

- l'insert présente une largeur C, mesurée horizontalement, dont le rapport à la longueur de corde B est supérieur ou égal à 1,3 :

$$B \geq 1.3 \cdot C$$

- le rapport entre la longueur B de corde de la saillie formée par l'insert en position déployée et son extension E transversale est inférieur ou égal à 3,5 :

$$B \leq 3.5 \cdot E$$

- le rapport entre la longueur B de corde de la saillie formée par l'insert en position déployée et son extension E transversale est supérieur ou égal à 2,2 :

$$B \geq 2.2 \cdot E$$

- la longueur B de corde de la saillie formée par l'insert en position déployée est inférieure ou égale à 75 mm :

$$B \leq 75 \; mm$$

- la longueur B de corde de la saillie formée par l'insert en position déployée est supérieure ou égale à 50 mm :

$$B \geq 50 mm$$

- le rapport entre la longueur de corde cumulée, notée A, mesurée dans un plan horizontal contenant l'axe transversal, de l'excroissance et de la saillie formée par l'insert en position déployée et l'extension transversale cumulée, notée F, de l'excroissance et de l'insert en position déployée est inférieur ou égal à 3,3 :

$$A \leq 3.3 \cdot F$$

- le rapport entre la longueur de corde cumulée, notée *A,* mesurée dans un plan horizontal contenant l'axe transversal, de l'excroissance et de la saillie formée par l'insert en position déployée et l'extension transversale cumulée, notée *F,* de l'excroissance et de l'insert en position déployée est supérieur ou égal à 2 :

$$A \geq 2 \cdot F$$

- l'extension *E* transversale de la saillie formée par l'insert au-delà de l'excroissance est inférieure ou égale à 35 mm :

$$E \leq 35 \, mm$$

- l'extension *E* transversale de la saillie formée par l'insert au-delà de l'excroissance est supérieure ou égale à 10 mm :

$$E \geq 10 \, mm$$

- compte tenu d'un décalage, noté *I*, entre l'axe principal et l'axe transversal, l'extension *E* transversale est telle que :

$$E \leq 45 \, mm - I$$

D'autres objets et avantages de l'invention apparaîtront à la lumière de la description d'un mode de réalisation, faite ci-après en référence aux dessins annexés dans lesquels :

- la **FIG.1** est une vue en coupe et en perspective montrant une unité de moulage pourvue d'une paire de dispositifs de boxage ;
- la **FIG.2** est une vue en coupe et en perspective éclatée montrant, par l'intérieur, un demi-moule et son dispositif de boxage associé ;
- la **FIG.3** est une vue en coupe et en perspective éclatée montrant, par l'extérieur, un demi-moule et son dispositif de boxage associé ;
- la **FIG.4** est une vue en perspective et en coupe brisée montrant le demi-moule de la **FIG.2** et de la **FIG.3** ;
- la **FIG.5** est une vue en coupe horizontale montrant l'unité de moulage, prise au niveau des dispositifs de boxage ;
- la **FIG.6** est une vue de détail en coupe verticale montrant un dispositif de boxage en position rétractée de l'insert, pendant le formage d'un récipient ;
- la **FIG.7** est une vue similaire à la **FIG.6,** montrant l'insert en position déployée ;
- la **FIG.8** est une vue de détail en coupe horizontale montrant le dispositif de boxage en position rétractée de l'insert, pendant le formage d'un récipient ;
- la **FIG.9** est une vue similaire à la **FIG.8,** montrant l'insert en position déployée ;
- la **FIG.10** est une vue en perspective éclatée montrant une partie de l'unité de moulage ;
- la **FIG.11** est une vue de détail en coupe horizontale illustrant le dimensionnement du moule et de l'insert ;
- la **FIG.12** est une vue en coupe partielle verticale du moule, montrant les deux inserts en regard en position déployée ;
- la **FIG.13** est une vue en perspective d'un récipient formé dans une unité de moulage telle qu'illustrée sur les figures précédentes ;
- la **FIG.14** est une vue en coupe horizontale du récipient de la **FIG.13,** suivant le plan de coupe XIV-XIV ;
- la **FIG.15** est une vue en coupe en perspective éclatée montrant, par l'intérieur, un demi-moule et son dispositif de boxage associé, selon une variante de réalisation ;
- la **FIG.16** est une vue de détail en coupe horizontale montrant le dispositif de boxage de la **FIG.15** en position déployée de l'insert ;
- la **FIG.17** est une vue en perspective, par l'avant, d'un insert équipant le demi-moule des **FIG.15** et **FIG.16** ;
- la **FIG.18** est une vue en perspective, par l'arrière, de l'insert de la **FIG.17.**

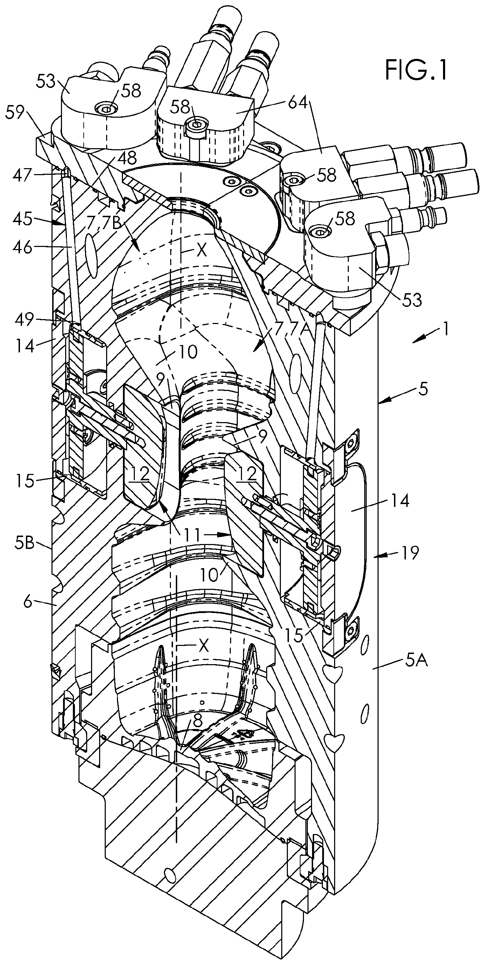

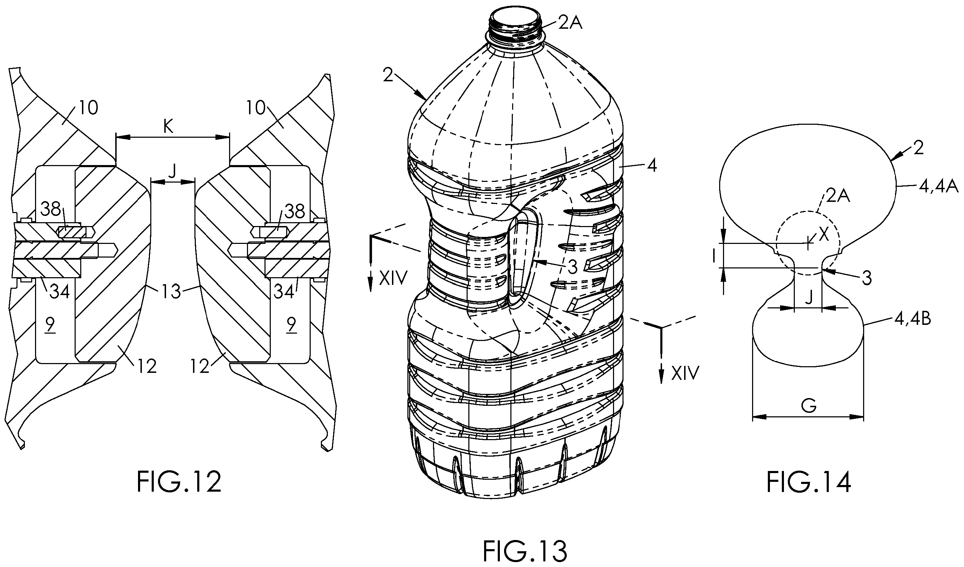

Sur la **FIG.1** est représentée, en coupe et en perspective, une unité **1** de moulage pour le formage, à partir d'une ébauche (typiquement une préforme), d'un récipient **2** (tel qu'une bouteille ou un bidon, comme illustré sur la **FIG.13**) muni d'une réserve **3** formée en creux vers l'intérieur du récipient **2**. Le récipient **2** est pourvu, de manière classique, d'un corps **4,** d'un fond et d'un col **2A** qui s'ouvre à l'opposé du fond. Dans l'exemple illustré sur les **FIG.13** et **FIG.14,** la réserve **3** en creux est une poignée formée dans le corps **4** du récipient pour en faciliter la préhension.

Dans ce cas, le corps **4** est, au niveau de la poignée, subdivisé en une partie **4A** avant et une partie **4B** arrière. Comme illustré sur la **FIG.14,** la partie **4A** avant et la partie **4B** ont des formes bombées. La partie **4B** arrière est la partie qui est destinée à être logée dans la paume de l'utilisateur lorsque celui-ci saisit le récipient individuellement.

L'unité **1** de moulage comprend, en premier lieu, un moule **5** muni d'une paroi **6** latérale qui définit une cavité **7** à l'empreinte d'une partie du récipient **2**. En l'espèce, la cavité **7** est à l'empreinte du corps **4** du récipient **2**, le moule **5** comprenant en outre un fond **8** à l'empreinte du fond du récipient **2**. Le moule **5** est réalisé en métal, par exemple en acier ou en aluminium (ce terme couvrant également les alliages d'aluminium). La cavité **7** (et donc le récipient **2**) s'étend suivant un axe **X** principal qui définit une direction verticale. Tout plan perpendiculaire à l'axe **X** principal est dit horizontal.

Selon un mode de réalisation illustré sur les dessins, la paroi **6** latérale comprend deux demi-moules **5A, 5B** définissant chacun une demi-empreinte **7A, 7B** du corps **4** du récipient **2** et montés en rotation l'un par rapport à l'autre autour d'un axe commun formé par une charnière, entre :

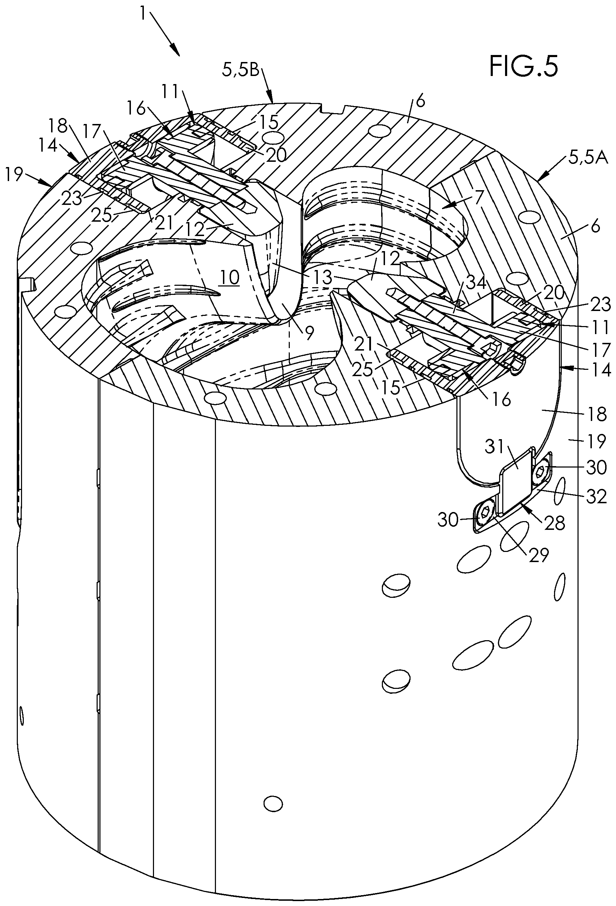

- une position ouverte, dans laquelle les demi-moules **5A, 5B** sont écartés angulairement l'un de l'autre pour permettre l'introduction de l'ébauche et l'évacuation du récipient **2** formé,
- une position fermée (illustrée sur la **FIG.1** et sur la **FIG.5**), dans laquelle les demi-moules **5A, 5B** sont appliqués l'un contre l'autre et emprisonnent entre eux le fond **8** de moule, pour former ainsi la cavité **7** et définir l'empreinte du récipient **2** à former.

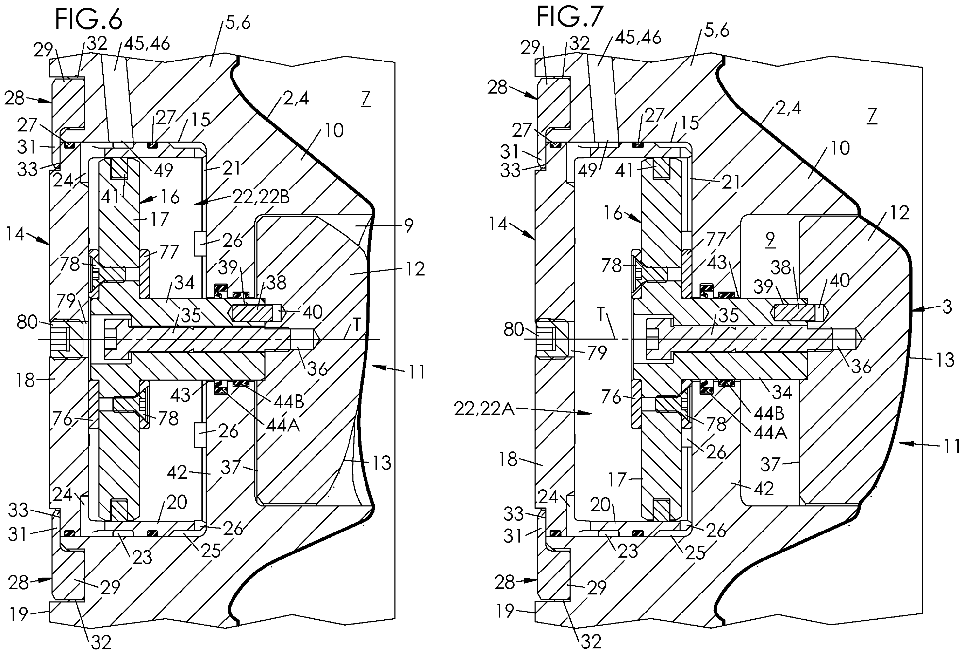

La paroi **6** latérale est pourvue d'un logement **9** qui s'ouvre dans la cavité **7**. Comme on le voit notamment sur la **FIG.6** et sur la **FIG.7**, ce logement **9** est formé en creux dans une excroissance **10** formant une saillie vers l'intérieur de la cavité **7** et formant une partie de la contre-empreinte de la réserve **3** en creux définissant la poignée.

Selon un mode de réalisation illustré notamment sur la **FIG.1** et sur la **FIG.5**, correspondant à un récipient **2** pourvu de deux réserves **3** en creux, de préférence symétriques par rapport à un plan central de symétrie générale du récipient **2** et formant conjointement la poignée, chaque demi-moule **5A, 5B** est pourvu d'un logement **9** s'ouvrant dans la demi-empreinte **7A, 7B** et formé en creux dans une excroissance **10** qui forme une saillie vers l'intérieur de la cavité **7.**

L'unité **1** de moulage comprend en deuxième lieu, et pour chaque logement **9,** un dispositif **11** de boxage. Le terme « boxage » désigne une technique de modelage local de la matière par repoussage au moyen d'une pièce mobile, pratiquée pendant le formage du récipient **2** (et plus précisément initiée pendant les phases de présoufflage et de soufflage du récipient **2**).

Chaque dispositif **11** de boxage comprend un insert **12,** de forme complémentaire d'un logement **9** et reçu dans celui-ci. Chaque insert **12** présente une face **13** frontale à l'empreinte d'une partie locale (c'est-à-dire de faible superficie relative) du récipient **2,** et plus précisément du fond de la réserve **3** en creux. La face **13** frontale est destinée à venir repousser la matière du récipient **2** pour compléter l'empreinte de la réserve **3** en creux, comme il sera expliqué ci-après. L'insert **12** est avantageusement réalisé en aluminium.

Comme on le voit sur la **FIG.1** et sur la **FIG.5**, l'unité **1** de moulage est équipée d'une paire de dispositifs **11** de boxage (de préférence symétriques) dont les inserts **12** sont placés en regard l'un de l'autre.

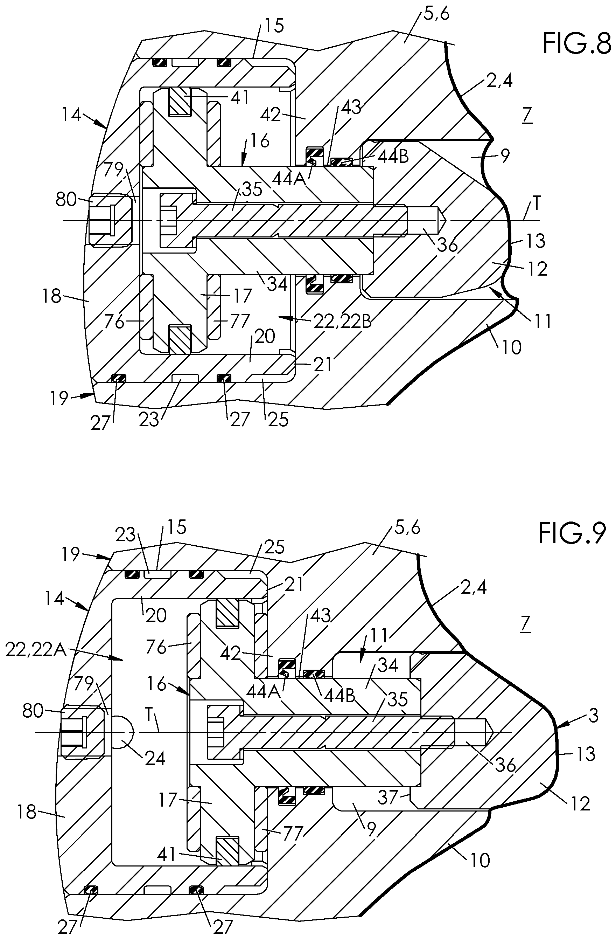

Chaque insert **12** est monté en translation par rapport à la paroi **6** latérale (c'est-à-dire, dans l'exemple illustré, par rapport à chaque demi-moule **5A, 5B**) suivant un axe **T** transversal entre une position rétractée (**FIG.6** et **FIG.8**) dans laquelle l'insert **12** est au moins en partie escamoté dans le logement **9,** et une position déployée (**FIG.7** et **FIG.9**) dans laquelle l'insert **12** fait au moins en partie saillie dans la cavité **7** hors du logement **9.**

Plus précisément, et comme cela est bien visible sur la **FIG.6** et sur la **FIG.8,** en position rétractée de l'insert **12,** la face **13** frontale est incluse dans le logement **9** et ne dépasse pas de l'excroissance **10,** tandis qu'en position déployée de l'insert **12,** la face **13** frontale fait saillie dans la cavité **7** et s'étend dans le prolongement de l'excroissance **10** pour compléter avec celle-ci l'empreinte de la réserve **3** formée en creux dans le récipient **2.**

Cette configuration n'est pas exclusive. Ainsi, selon un autre mode de réalisation, en position rétractée de l'insert **12,** la face **13** frontale de l'insert **12** est située en saillie par rapport au bord interne de l'excroissance **10.** Selon encore un autre mode de réalisation, en position rétractée de l'insert **12,** la face **13** frontale de l'insert **12** se trouve dans le prolongement du bord interne de l'excroissance **10.**

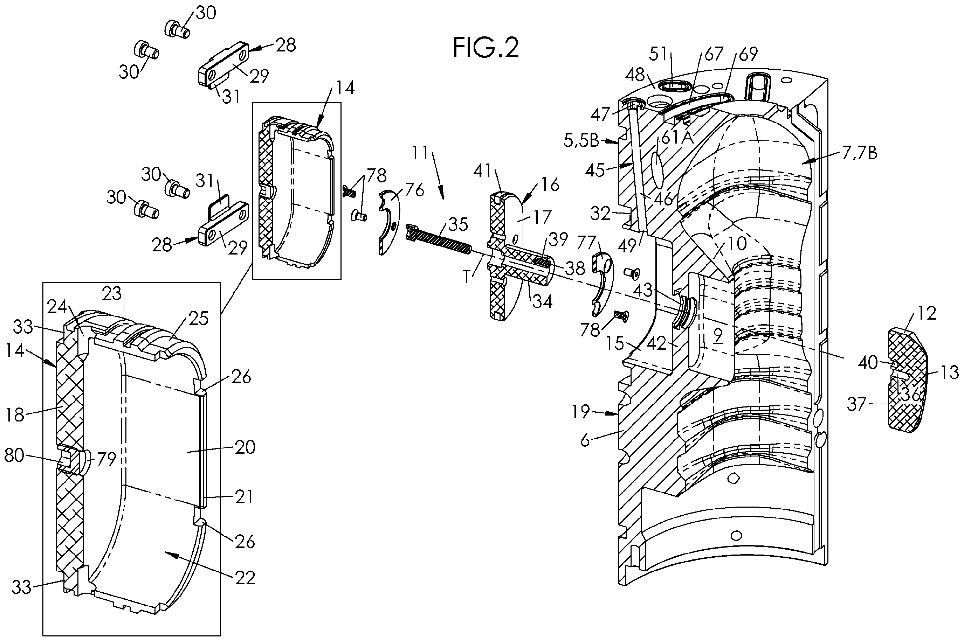

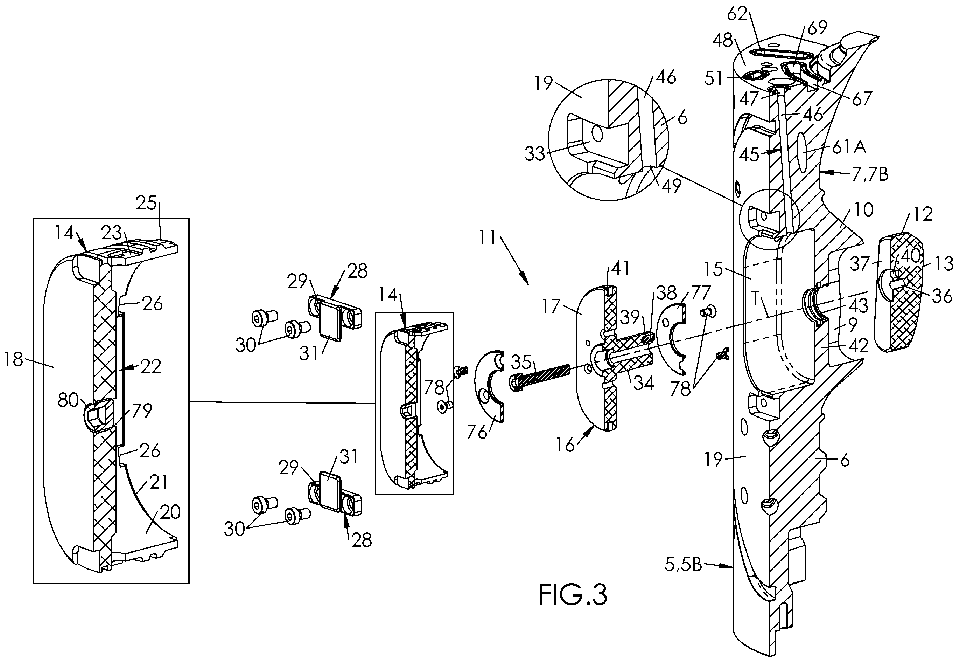

Comme on le voit bien sur les **FIG.2** et **FIG.3,** l'insert **12** (comme son logement **9**) présente un contour asymétrique de révolution autour de l'axe **T,** ce qui bloque la rotation de l'insert **12** autour de celui-ci. Plus précisément, l'insert **12** est, de préférence, plus haut (suivant l'axe **X** général du moule **5**) que large (dans un plan horizontal) Dans l'exemple illustré, l'insert **12** présente un contour ovale de grand axe sensiblement vertical.

Comme illustré sur les dessins, chaque dispositif **11** de boxage comprend par ailleurs une chemise **14** rapportée, montée dans un évidement **15** complémentaire creusé dans la paroi **6** latérale (c'est-à-dire, dans l'exemple illustré, dans chaque demi-moule **5A, 5B**) et fixée à celle-ci. La chemise **14** est avantageusement réalisée en acier.

Chaque dispositif **11** de boxage comprend en outre un actionneur **16** solidaire de l'insert **12** pour déplacer celui-ci de sa position rétractée à sa position déployée, et réciproquement, et comprenant à cet effet un piston **17** monté en translation dans la chemise **14**. L'actionneur **16** est de préférence réalisé en aluminium.

Selon un mode de réalisation illustré sur les dessins, et plus particulièrement visible sur les **FIG.6** à **FIG.9,** la chemise **14** comprend une paroi **18** de fond qui, lorsque la chemise **14** est insérée dans son évidement **15,** affleure une face **19** externe du moule **5,** et un cylindre **20** qui fait saillie transversalement de la paroi **18** de fond et se termine par un rebord **21.**

La chemise **14** définit intérieurement une chambre **22** dans laquelle est monté le piston **17.** Comme l'insert **12,** la chemise **14** et l'évidement **15** la recevant, de même que le piston **17,** présentent un contour asymétrique de révolution autour de l'axe **T** transversal, ce qui bloque toute rotation du piston **17** autour de celui-ci, au bénéfice de la précision de guidage en translation de l'insert **12.** Plus précisément, la chemise **14,** son évidement **15** et le piston **17** sont, de préférence, plus hauts (suivant l'axe **X** général du moule **5**) que larges (dans un plan horizontal). Dans l'exemple illustré, la chemise **14,** l'évidement **15** et le piston **17** présentent un contour ovale de grand axe sensiblement vertical.

Le piston **17** subdivise la chambre **22** en une demi-chambre **22A** arrière et une demi-chambre **22B** avant. Dans l'exemple illustré, la demi-chambre **22A** arrière est limitée intérieurement par le piston **17** et extérieurement par la paroi **18** de fond de la chemise **14.** Egalement dans l'exemple illustré, la demi-chambre **22B** avant est limitée extérieurement par le piston **17** et intérieurement par le fond de l'évidement **15.**

La chemise **14** est pourvue, sur une face périphérique externe du cylindre **20,** d'une rainure **23** arrière qui débouche dans la demi-chambre **22A** arrière par plusieurs ouvertures (ici sous forme de perçages) **24** dans la chemise **14,** distribuées sur la périphérie de celle-ci. Dans l'exemple illustré, la chemise **14** est pourvue de deux ouvertures **24** diamétralement opposées, distribuées en l'occurrence suivant un axe vertical. En variante, la chemise **14** pourrait inclure un nombre d'ouvertures **24** supérieur, par exemple quatre ouvertures **24** réparties à 90° (ou différemment) autour de l'axe **T** transversal.

La chemise **14** est en outre pourvue, sur la face périphérique externe du cylindre **20,** d'une rainure **25** avant qui débouche dans la demi-chambre **22B** avant par plusieurs échancrures **26** pratiquées dans le rebord **21** et distribuées sur la périphérie de la chemise **14.** Dans l'exemple illustré, la chemise **14** est pourvue de six échancrures réparties à environ 60° autour de l'axe **T** transversal.

Des joints **27** montés sur la face externe du cylindre **20,** et comprimés entre celui-ci et l'évidement **15,** assurent l'étanchéité des rainures **23, 25** l'une par rapport à l'autre, et donc des demi-chambres **22A, 22B** l'une par rapport à l'autre.

Après son introduction dans l'évidement **15,** la chemise **14** est fixée à la paroi **6** latérale du moule **5.** Comme cela est visible sur les dessins, et plus particulièrement sur la **FIG.2** et sur la **FIG.3,** la chemise **14** est fixée à la paroi **6** latérale au moyen d'au moins une bride **28** comprenant un corps **29** fixé sur le moule **5** au moyen de vis **30,** et une languette **31** faisant saillie du corps **29** et prenant appui, par l'extérieur, contre la paroi **18** de fond de la chemise **14.** Dans l'exemple illustré, la chemise **14** est fixée à la paroi **6** latérale au moyen d'une paire de brides **28** montées de part et d'autre, verticalement, de la chemise **14.**

Pour éviter toute excroissance sur la face **19** externe du moule **5,** chaque bride **28** vient avantageusement se loger dans une réserve **32** en creux formée de manière complémentaire dans la paroi **6** latérale du moule **5,** tandis que la languette **31** vient se loger dans un évidement **33** formé dans la paroi **18** de fond de la chemise **14.**

Selon un mode de réalisation illustré sur les dessins, l'actionneur **16** comprend une tige **34** qui s'étend radialement en saillie à partir du piston, et sur laquelle l'insert **12** est fixé, par exemple par vissage.

Plus précisément, dans l'exemple illustré, l'insert **12** est fixé sur la tige **34** au moyen d'une vis **35** traversant le piston **17** et la tige **34** et venant en prise hélicoïdale avec un trou **36** taraudé pratiqué dans une face **37** arrière de l'insert **12,** opposée à la face **13** frontale.

L'insert **12** est avantageusement immobilisé en rotation par rapport à l'actionneur **16** au moyen d'une goupille **38** montée dans un trou **39** pratiqué dans la tige **34** et dont une extrémité en saillie vient se loger dans un trou **40** pratiqué, en regard, dans la face **37** arrière de l'insert **12.**

Comme cela est bien visible sur les **FIG.6** à **FIG.9,** le piston **17** est pourvu d'un segment **41** périphérique rapporté, en contact avec le cylindre **20** et qui, en complément des joints **27,** assure le cloisonnement étanche des deux demi-chambres **22A, 22B.** Le segment **41** est avantageusement réalisé dans un matériau à faible coefficient de frottement, par exemple en bronze ou, de préférence, en polytétrafluoroéthylène (PTFE).

Comme on le voit également sur les **FIG.6** à **FIG.9,** l'évidement **15** se termine, du côté de la cavité **7,** par une cloison **42** qui sépare l'évidement **15** du logement **9** et délimite intérieurement la demi-chambre **22B** avant.

Cette cloison **42** est percée d'un alésage **43** dans lequel la tige **34** de l'actionneur **16** est montée en translation, avec interposition d'un ou plusieurs joints **44A** d'étanchéité qui isolent la demi-chambre **22B** avant du logement **9,** et de préférence également avec interposition d'une ou plusieurs bagues **44B** de guidage. Dans l'exemple illustré, le joint **44A** est un joint dynamique à lèvre. Quant à la bague **44B,** elle peut être réalisée en PTFE (polytétrafluoroéthylène).

Chaque dispositif **11** de boxage comprend un circuit **45** fluidique de commande du déplacement du piston **17,** au moins de sa position rétractée à sa position déployée. Selon un mode de réalisation avantageux, le circuit **45** fluidique est pneumatique, le fluide employé étant un gaz (typiquement de l'air) sous pression.

Chaque circuit **45** comprend à cet effet au moins un conduit **46** fluidique primaire d'alimentation de la chambre **22** (et plus précisément de la demi-chambre **22A** arrière) qui communique avec la chambre **22** (et plus précisément avec la demi-chambre **22A** arrière) par les ouvertures **24**.

En pratique, et comme cela est visible notamment sur les **FIG.1** à **FIG.3, FIG.6, FIG.7** et **FIG.10,** le conduit **46** primaire est percé dans le moule **5** et débouche, par une extrémité **47** amont, sur une face **48** supérieure du moule **5** et, par une extrémité **49** aval, dans l'évidement **15** au droit de la rainure **23** arrière (**FIG.6** et **FIG.7**).

Selon un mode de réalisation illustré sur les dessins, la commande du déplacement du piston **17** est de type double effet, chaque circuit **45** fluidique étant configuré pour commander par ailleurs le déplacement du piston **17** correspondant de sa position déployée à sa position rétractée.

A cet effet, chaque circuit **45** comprend un conduit **50** fluidique secondaire d'alimentation de la demi-chambre **22B** avant, qui communique avec celle-ci par les échancrures **26**.

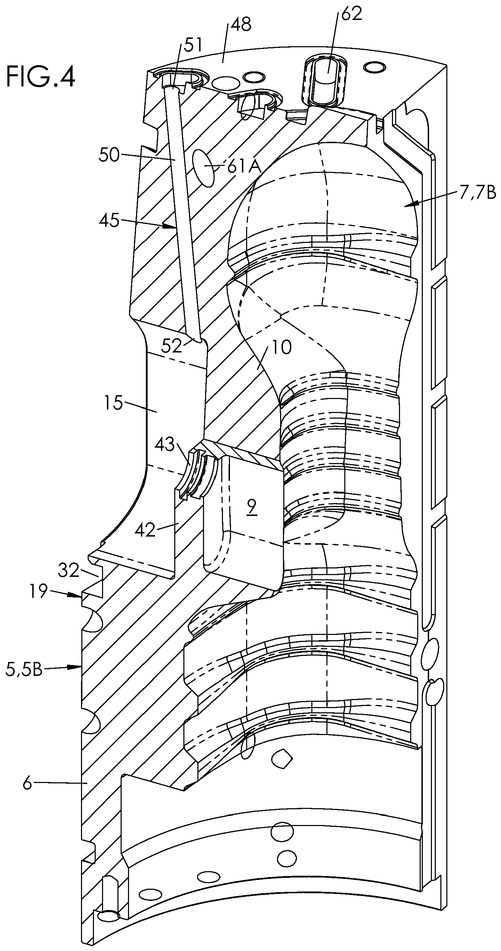

Plus précisément, et comme cela est visible notamment sur la **FIG.4,** le conduit **50** secondaire est percé dans le moule **5** et débouche, par une extrémité **51** amont, sur la face **48** supérieure du moule **5** et, par une extrémité **52** aval, dans l'évidement **15** au droit de la rainure **25** avant.

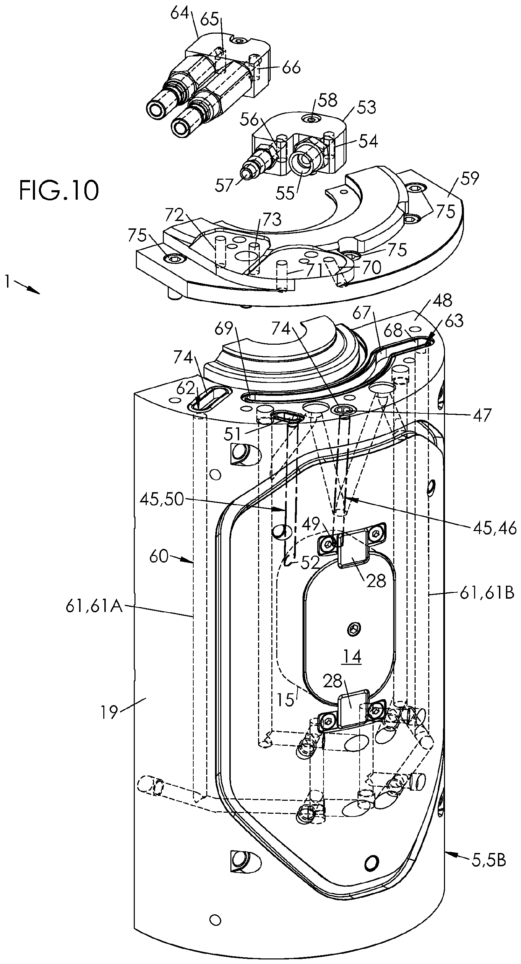

Selon un mode de réalisation illustré sur les dessins, le conduit **46** primaire est pratiqué sensiblement verticalement dans la paroi **6** latérale du moule **5,** tandis que le conduit **50** secondaire est pratiqué obliquement (avec cependant un angle assez faible) dans la paroi **6** latérale du moule **5. **Sur la **FIG.10,** le conduit **46** primaire et le conduit **50** secondaire sont représentés en trait mixte gras.

Comme on le voit sur la **FIG.1** et sur la **FIG.10,** l'unité **1** de moulage comprend un raccord **53** pneumatique d'alimentation en fluide sous pression au moins du conduit **46** primaire. A cet effet, le raccord **53** comprend une arrivée **54** primaire en communication avec l'extrémité **47** amont du conduit **46** primaire. Cette arrivée **54** primaire se présente avantageusement sous forme d'un conduit percé dans le raccord **53,** et qui débouche dans une fiche **55** primaire (ici de type mâle) de branchement à un flexible primaire (non représenté) d'amenée de fluide sous pression.

L'arrivée **54** primaire est, via la fiche **55** primaire et le flexible primaire, de préférence reliée à une source de fluide, typiquement du gaz, à pression élevée, avantageusement supérieure à 20 bars (et par ex. de 40 bars environ). Il peut s'agir de la source utilisée pour le soufflage des récipients, ou bien d'une source de pression autre, générant le cas échéant une pression de valeur différente de la source de soufflage.

Dans l'exemple illustré, où la commande de déplacement du piston **17** est à double effet, et où, outre le conduit **46** primaire, le circuit **45** pneumatique comprend un conduit **50** secondaire d'alimentation de la demi-chambre **22B** avant, le raccord **53** pneumatique comprend une arrivée **56** secondaire en communication avec l'extrémité **51** amont du conduit **50** secondaire. Cette arrivée **56** secondaire se présente avantageusement sous forme d'un conduit percé dans le raccord **53,** et qui débouche dans une fiche **57** secondaire (ici également de type mâle) de branchement à un flexible secondaire (non représenté) d'amenée de fluide sous pression.

L'arrivée **56** secondaire est, via la fiche **57** secondaire et le flexible secondaire, reliée à une source de fluide à pression comparativement plus faible, avantageusement inférieure ou égale à 12 bars (et par ex. de 7 bars environ).

Les extrémités **47, 51** amont des conduits **46, 50** débouchent avantageusement au voisinage l'une de l'autre, de manière à permettre leur branchement conjoint aux sources respectives de fluide sous pression via un unique raccord **53** monté sur la face **48** supérieure du moule **5,** comme illustré sur la **FIG.1.**

Le raccord **53** est fixé sur le moule **5** par encliquetage ou, comme dans l'exemple illustré sur la **FIG.1** et sur la **FIG.10,** au moyen d'au moins une vis **58**.

Selon un mode de réalisation avantageux illustré sur la **FIG.1** et sur la **FIG.10,** l'unité **1** de moulage comprend un couvercle **59** monté sur la face **48** supérieure du moule **5** et interposé entre celle-ci et le raccord **53**.

Comme cela est visible sur la **FIG.10,** l'unité **1** de moulage comprend un circuit **60** fluidique (par ex. hydraulique) de régulation thermique de la paroi **6**. Le fluide employé est avantageusement un liquide, par ex. de l'eau ou de l'huile. Ce circuit **60** est prévu pour maintenir la température de la paroi **6** à une température sensiblement constante, soit basse (typiquement de l'ordre de 10°C) pour assurer un refroidissement du récipient **2** tout juste formé, soit élevée (typiquement de l'ordre de 120°C) pour assurer une thermofixation du récipient **2** et accroître ainsi, par voie thermique, sa cristallinité (et donc sa résistance mécanique).

Comme on le voit sur la **FIG.10,** le circuit **60** fluidique inclut des canaux **61** percés dans la paroi **6** du moule **5** et s'étend entre une ouverture **62** d'alimentation et une ouverture **63** d'évacuation pratiquées dans la face **48** supérieure du moule **5. **En d'autres termes, le circuit **60** fluidique débouche, par l'ouverture **62** d'alimentation et par l'ouverture **63** d'évacuation, sur la face **48** supérieure du moule **5.**

Pour des raisons de commodité de fabrication (par perçage), les canaux **61** sont subdivisés en plusieurs sections, tout particulièrement :

- une section **61A** amont, qui débouche sur l'ouverture **62** d'alimentation et inclut plusieurs alésages pratiqués verticalement, horizontalement et/ou obliquement dans la paroi **6** ;
- une section **61B** aval, qui débouche sur l'ouverture **63** d'évacuation et inclut également plusieurs alésages pratiqués verticalement, horizontalement et/ou obliquement dans la paroi **6** et qui communique avec la section **61A** amont dans une zone médiane du moule **5.**

Comme on peut le voir sur la **FIG.10** où ils sont visibles par transparence en pointillés, les canaux **61** sont percés de manière à contourner l'évidement **15** et à ne pas croiser les conduits **46, 50** du circuit **45** fluidique pneumatique.

Comme on le voit sur la **FIG.1** et sur la **FIG.10,** l'unité **1** de moulage comprend un raccord **64** fluidique monté sur la face **48** supérieure du moule **5** pour assurer l'alimentation du circuit **60** fluidique en liquide frais (ou, respectivement, réchauffé) et assurer l'évacuation de celui-ci du liquide réchauffé (ou refroidi), après qu'il a effectué un échange thermique avec la paroi **6.**

A cet effet, le raccord **64** fluidique comprend une arrivée **65** fluidique (ici sous forme d'un conduit percé dans le raccord **64**) en communication avec l'ouverture **62** d'alimentation, et une sortie **66** fluidique (ici également sous forme d'un conduit percé dans le raccord **64**) en communication avec l'ouverture **63** d'évacuation.

Dans l'exemple illustré sur la **FIG.10,** les ouvertures **62, 63** sont distantes l'une de l'autre, et débouchent sur la face **48** supérieure de manière sensiblement diamétralement opposée. Afin de permettre un raccordement fluidique simultané des ouvertures **62, 63** via un raccord **64** compact, le moule **5** comprend une gorge **67** creusée dans la face **48** supérieure, qui s'étend d'une extrémité **68** externe située au droit de l'ouverture **63** d'évacuation, jusqu'à une extrémité **69** interne située au voisinage de l'ouverture **62** d'alimentation.

Selon un mode de réalisation préféré, illustré sur la **FIG.1** et sur la **FIG.10,** où l'unité **1** de moulage est pourvue d'un couvercle **59** rapporté fixé sur la face **48** supérieure du moule **5,** ce couvercle **59** est interposé entre la face **48** supérieure et le raccord **64** fluidique.

Comme on peut le voir par transparence sur la **FIG.10,** le couvercle **59** est pourvu de perçages **70** à **73** de mise en communication de chaque raccord **53, 64** avec son circuit **45, 60** respectif.

De manière plus détaillée, le couvercle **59** comprend :

- un premier perçage **70** (oblique) de mise en communication de l'arrivée **54** primaire du raccord **53** pneumatique avec l'extrémité **47** amont du conduit **46** primaire ;
- un deuxième perçage **71** (vertical) de mise en communication de l'arrivée **56** secondaire du raccord **53** pneumatique avec l'extrémité **51** amont du conduit **50** secondaire ;
- un troisième perçage **72** (vertical) de mise en communication de l'arrivée **65** fluidique avec l'ouverture **62** d'alimentation ;
- un quatrième perçage **73** (vertical) de mise en communication de la sortie **66** fluidique avec l'ouverture **63** d'évacuation. Dans l'exemple illustré, le quatrième perçage **73** débouche au droit de l'extrémité **69** interne de la gorge **67,** via laquelle le quatrième perçage **73** est en communication fluidique avec l'ouverture **63** d'évacuation.

L'étanchéité aux gaz et aux liquides (typiquement à l'air et à l'eau) de l'interface entre le couvercle **59** et la face **48** supérieure est assurée, autour des extrémités **47, 51** amont des conduits **46, 50** et autour des ouvertures **62, 63** (et plus précisément autour de la gorge **67**), au moyen de joints **74** en élastomère, par exemple en silicone ou en caoutchouc naturel ou synthétique.

La fixation du couvercle **59** sur la face **48** supérieure du moule **5** peut, comme dans l'exemple illustré, être assurée au moyen de vis **75.**

Le fait que le circuit **45** pneumatique et le circuit **60** fluidique débouchent tous deux sur la face **48** supérieure du moule **5** permet de déporter sur celle-ci les branchements d'alimentation des circuits **45, 60,** et procure de ce fait au moins trois avantages :

- d'abord, il n'est pas nécessaire de ménager des accès latéraux aux flexibles d'amenée (et d'évacuation), ce qui simplifie l'architecture de l'unité **1** de moulage, et en particulier des pièces de support du moule **5 ;**
- ensuite, l'encombrement radial de l'unité **1** de moulage est réduit ;
- enfin, les branchements par la face **48** supérieure sont plus simples et aisés pour tout technicien chargé de la maintenance de l'unité **1** de moulage.

Par ailleurs, pour assurer le positionnement précis de l'insert **12** par rapport à la cavité **7,** et pour limiter en outre l'usure de l'actionneur **16** et du moule **5,** chaque dispositif **11** de boxage comprend avantageusement une paire de silentblocs **76, 77** rapportés, fixés sur l'actionneur **16** de part et d'autre du piston **17,** à savoir :

- un silentbloc **76** arrière fixé sur le piston **17** au moyen de vis **78,** et qui, en position rétractée de l'insert **12,** est pris en sandwich entre le piston **17** et la paroi **18** de fond (**FIG.6, FIG.8**) ;
- un silentbloc **77** avant emmanché sur la tige **34** et fixé sur le piston **17** au moyen de vis **78** et qui, en position déployée de l'insert **12,** est pris en sandwich entre le piston **17** et la cloison **42** (**FIG.7, FIG.9**).

Il est rappelé ici que le terme "Silentbloc" (au singulier) est une marque française de la société HUTCHINSON SA, d'où est issu un nom commun utilisé pour désigner (cf. dictionnaire Larousse, par exemple) un dispositif souple de fixation ou d'amortissement entre deux éléments : l'emploi des termes "silentbloc" ou "silentblocs" dans la présente demande renvoie à un tel dispositif.

Selon un mode préféré de réalisation, chaque silentbloc **76, 77** est réalisé en polyuréthane, de préférence dans une nuance de polyuréthane commercialisée par la société Trelleborg sous la dénomination Zurcon Z20 (marque déposée). Ce matériau présente le double avantage d'une grande dureté (au bénéfice de la précision de positionnement de l'insert **12**) et d'une bonne résistance à l'usure, au bénéfice de la fiabilité et de la durabilité du dispositif **11** de boxage.

Le montage de chaque dispositif **11** de boxage dans chaque demi-moule **5A, 5B** est illustré sur les **FIG.2** et **FIG.3**.

Les silentblocs **76, 77** sont fixés sur l'actionneur **16** au moyen des vis **78** ; la goupille **38** est emmanchée dans le trou **39** et la vis **35** de fixation de l'insert **12** introduite dans l'actionneur **16** jusqu'à faire saillie de l'extrémité de la tige **34**. Le piston **17** est alors inséré dans la chemise **14**, puis celle-ci, équipée de ses joints **27** d'étanchéité, est introduite, par l'extérieur du moule **5,** dans son évidement **15** suivant l'axe **T** transversal, la tige **34** étant insérée dans l'alésage **43**.

La chemise **14** est fixée sur la paroi **6** latérale du moule au moyen des brides **28,** qui sont montées dans leurs réserves **32** respectives et vissées sur la paroi **6** latérale. L'insert **12** est monté par l'intérieur du demi-moule **5A, 5B** en étant introduit dans le logement **9** suivant l'axe **T** transversal jusqu'au contact avec l'extrémité de la tige **34,** la goupille **38** venant se loger dans le trou **40** pratiqué dans la face **37** arrière de l'insert **12**.

La fixation de l'insert **12** sur la tige **34** est alors réalisée au moyen de la vis **35,** dont le serrage dans le trou **36** taraudé est assuré au moyen d'un tournevis ou d'une clé appropriée (selon l'empreinte formée dans la tête de vis) passant au travers d'une ouverture **79** pratiquée, suivant l'axe **T,** dans la paroi **18** de fond de la chemise **14**.

Une fois réalisée la fixation de l'insert **12** sur l'actionneur **16,** l'ouverture **79** est obturée de manière étanche au moyen d'un bouchon **80** emmanché ou vissé dans celle-ci, comme illustré sur les **FIG.6** à **FIG.9**.

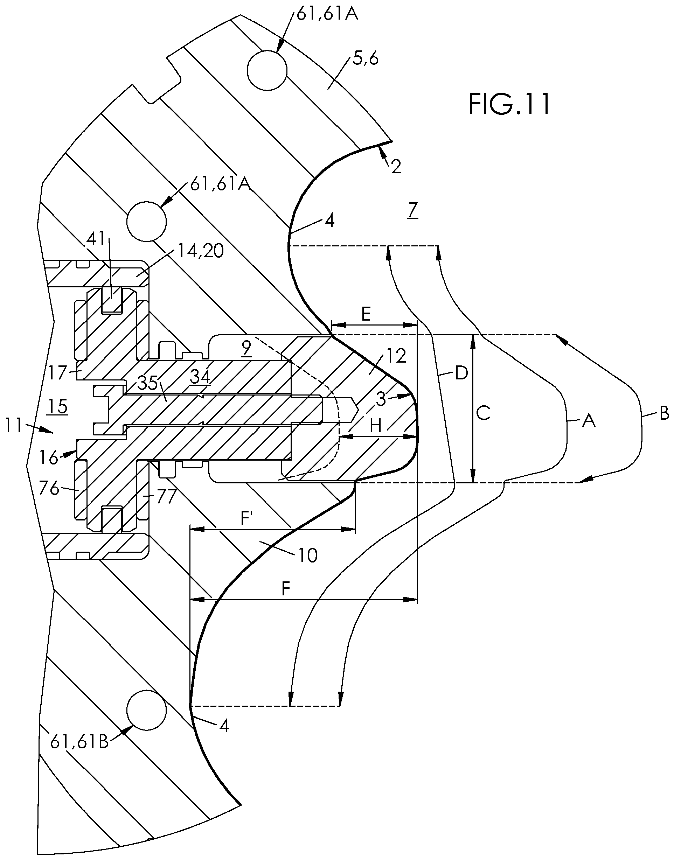

On a illustré sur les **FIG.11, FIG.12** et **FIG.14** le dimensionnement des parties de l'unité **1** de moulage permettant de former la réserve **3** en creux dans le récipient **2**.

Dans ce cadre, on note :

*A*  la longueur de corde cumulée, mesurée dans un plan horizontal contenant l'axe **T** transversal, de l'excroissance **10** et de la saillie formée par l'insert **12** en position déployée ;

*B*  la longueur de corde, également mesurée dans un plan horizontal contenant l'axe **T** transversal, de la saillie formée par l'insert **12** en position déployée au-delà de l'excroissance **10** ;

*C*  la largeur, mesurée horizontalement (c'est-à-dire perpendiculairement à l'axe **X** principal), de l'insert **12** ;

*D*  la longueur de corde, mesurée dans un plan horizontal contenant l'axe **T,** de l'excroissance **10**, en position rétractée de l'insert **12** ;

*E*  l'extension transversale (mesurée selon l'axe **T**) maximale de la saillie formée par l'insert **12** au-delà de l'excroissance **10** ;

*F*  l'extension transversale (mesurée selon l'axe **T**) maximale cumulée de l'excroissance **10** et de la saillie formée au-delà de l'excroissance **10** par l'insert **12** en position déployée ;

*F'*  l'extension transversale (mesurée selon l'axe **T**) maximale de l'excroissance **10** seule ;

*G*  la largeur, mesurée transversalement, de la partie **4B** arrière du corps **4** (la largeur *G* est considérée indifféremment sur le récipient **2** ou sur son empreinte dans le moule **5**) ;

*H*  la course de l'insert **12** (ou du piston **17**), mesurée en mm entre la position rétractée (en pointillés sur la FIG.11) et la position déployée (en trait plein sur la **FIG.11**) ;

*I*  sur le récipient **2,** le décalage, mesuré dans un plan horizontal, entre l'axe **X** (considéré dans le récipient **2**) et le fond de la réserve **3** en creux ; dans le moule **5,** *I* correspond sensiblement au décalage, mesuré dans un plan horizontal, entre l'axe **X** (considéré dans le moule **5**) et l'axe **T** transversal.

Les extensions *E, F* et *F'* sont dites « maximales » pour témoigner du cas, comme celui illustré sur la **FIG.11,** où la réserve **3**, et l'excroissance **10** et l'insert **12,** ne présentent pas de symétrie par rapport à un plan vertical contenant l'axe **T** transversal. C'est pourquoi les extensions *E* et *F* sont mesurées du côté de l'insert **12** (respectivement du côté de l'excroissance **10**) maximisant leur valeur, comme l'illustre la **FIG.11.**

Comme on l'a déjà vu, l'excroissance **10** forme une partie de la contre-empreinte de la réserve **3** en creux dans le récipient **2.** En position rétractée de l'insert **12,** l'extension *F'* transversale de l'excroissance **10** seule est telle qu'il persiste entre les excroissances **10** en regard un interstice dont la largeur, mesurée transversalement et notée *K*, est suffisante pour permettre, au cours du soufflage, le passage, lors de son expansion, de la préforme à partir de laquelle le récipient **2** est formé. Cette largeur *K* est typiquement de l'ordre de 40 mm.

Cela permet de limiter la course *H* de l'insert **12** et donc l'encombrement radial du dispositif **11** de boxage, au bénéfice de la compacité de l'unité **1** de moulage.

En pratique, la course *H* de l'insert **12** de sa position rétractée à sa position déployée est faible, c'est-à-dire qu'elle est inférieure ou égale à 20 mm. Par ailleurs, cette course est avantageusement supérieure ou égale à 10 mm. La course *H* de l'insert **12** est typiquement de l'ordre de 15 mm.

L'extension *F* transversale cumulée de l'excroissance **10** et de l'insert **12** en position déployée est telle qu'il persiste, en position déployée des deux inserts **12,** un interstice entre eux, de sorte que chaque réserve **3** en creux est borgne. En d'autres termes, la poignée formée dans le récipient **2** par les deux réserves **3** en creux dos à dos n'est pas traversante, comme illustré sur la **FIG.14.** On note *J* la largeur, mesurée transversalement, de l'interstice entre les inserts **12** en regard en position déployée. Cette largeur *J* est typiquement de l'ordre de 15 mm, ce qui correspond à la distance entre les deux réserves **3** en creux formant conjointement la poignée du récipient **2.**

Les extensions *E* et *F* sont telles que *E* est inférieure ou égale à 85% de *F* :

$$E \leq 0{,}85 \cdot F$$

Bien que limitée, la saillie formée au-delà de l'excroissance **10** par l'insert **12** en position déployée permet d'approfondir la réserve **3** malgré une course *H* faible.

Par ailleurs, la réserve **3** doit être suffisamment profonde pour faciliter la préhension du récipient **2.** A cet effet, l'extension *E* transversale est avantageusement supérieure ou égale à 30% de l'extension *F* transversale cumulée :

$$E \geq 0{,}3 \cdot F$$

Plus précisément, l'extension *E* transversale est de préférence inférieure ou égale à 35 mm :

$$E \leq 35 \, mm$$

A contrario, cette extension *E* transversale est de préférence supérieure ou égale à 10 mm :

$$E \geq 10 \, mm$$

En outre, l'extension *E* transversale est de préférence inférieure ou égale à 45 mm auxquels est soustraite la valeur du décalage *I* :

$$E \leq 45 \, mm - I$$

De même, il est avantageux de borner la longueur *B* de corde de la saillie formée par l'insert **12** en position déployée en fonction de la longueur *A* de corde cumulée de l'excroissance **10** et de la saillie formée par l'insert **12.**

Ainsi, *B* est de préférence inférieure ou égale à 80% de *A :*

$$B \leq 0{,}8 \cdot A$$

De cette façon, la quantité de matière qui subit l'étirage dû au boxage demeure limitée en extension verticale (selon l'axe **X**).

Par ailleurs, *B* est de préférence supérieure ou égale à 35% de *A* :

$$B \geq 0{,}35 \cdot A$$

Cela permet, malgré tout, d'étirer suffisamment la matière sans toutefois l'étirer au point d'en dégrader l'aspect visuel (le phénomène de surétirage se traduit par une coloration blanchâtre de la matière).

On peut également dimensionner l'insert **12** en liant sa longueur *B* de corde à sa largeur *C.*

Ainsi, le rapport entre la longueur *B* de corde et la largeur *C* est avantageusement inférieur ou égal à 2,3 :

$$B \leq 2{,}3 \cdot C$$

A contrario, ce rapport est avantageusement supérieur ou égal à 1,3 :

$$B \geq 1,3 \cdot C$$

On peut en outre dimensionner l'insert **12** en liant sa longueur B de corde à son extension E transversale.

Ainsi, le rapport entre la longueur B de corde de la saillie formée par l'insert **12** en position déployée et son extension E transversale est de préférence inférieur ou égal à 3,5 :

$$B \leq 3,5 \cdot E$$

A contrario, ce rapport est avantageusement supérieur ou égal à 2,2 :

$$B \geq 2,2 \cdot E$$

Plus précisément, la longueur B de corde de la saillie formée par l'insert **12** en position déployée est de préférence inférieure ou égale à 75 mm :

$$B \leq 75 \ mm$$

A contrario, la longueur B de corde de la saillie formée par l'insert **12** en position déployée est de préférence supérieure ou égale à 50 mm :

$$B \geq 50 \ mm$$

Il peut être avantageux de lier la longueur A de corde cumulée à l'extension F transversale cumulée.

Plus précisément, le rapport entre la longueur A de corde cumulée à l'extension F transversale cumulée est de préférence inférieur ou égal à 3,3 :

$$A \leq 3,3 \cdot F$$

A contrario, ce rapport est avantageusement supérieur ou égal à 2 :

$$A \geq 2 \cdot F$$

On récapitule, dans le tableau ci-dessous, des exemples de plages de valeurs (en millimètres) pour les paramètres A à J :

| Paramètre | Valeur min. (exemple) | Valeur max. (exemple) |
|:---:|:---:|:---:|
| A | 80 | 120 |
| B | 50 | 75 |
| C | 25 | 40 |
| D | 60 | 100 |
| E | 10 | 35 |
| F | 30 | 50 |
| G | 45 | 70 |
| H | 10 | 20 |

(suite)

| Paramètre | Valeur min. (exemple) | Valeur max. (exemple) |
|---|---|---|
| I | 0 | 45 |
| J | 14 | 25 |

Pour former un récipient 2, on procède comme suit.

On commence par introduire dans le moule 5, en position ouverte de celui-ci, une ébauche préalablement chauffée à une température supérieure à la température de transition vitreuse de sa matière (typiquement, une ébauche en PET, dont la température de transition vitreuse est de l'ordre de 80°C, est chauffée à une température de 120°C environ). Chaque insert 12 est alors dans sa position rétractée.

Le moule 5 est ensuite refermé, et un fluide (notamment de l'air) sous pression (par ex. d'environ 7 à 15 bars) est injecté dans l'ébauche, laquelle est, de préférence, simultanément étirée au moyen d'une tige coulissante. Sous la pression, la matière de l'ébauche est amenée au voisinage de la paroi 6 latérale et du fond 8 de moule, sans toutefois y être appliquée de manière intime. Comme illustré sur les FIG.6 et FIG.8, il se peut que, sous la pression, la matière se déploie quelque peu dans le logement 9 en venant éventuellement partiellement s'appliquer partiellement contre la face 13 frontale de l'insert 12.

Chaque insert 12 est ensuite déplacé vers sa position déployée. A cet effet, un fluide sous pression (ici de l'air à une pression élevée, supérieure ou égale à 20 bars et typiquement de l'ordre de 40 bars) est injecté, via le conduit 46 primaire et la rainure 23 arrière, dans la demi-chambre 22A arrière, cependant que le fluide présent dans la demi-chambre 22B avant est simultanément évacué, via la rainure 25 avant, par le conduit 50 secondaire. Sous la différence de pression entre la demi-chambre 22A arrière et la demi-chambre 22B avant, le piston 17 est, avec l'insert 12 dont il est solidaire, déplacé transversalement en direction de la cavité 7, jusqu'à venir buter, par l'intermédiaire du silentbloc 77 avant, contre la cloison 42, qui détermine ainsi la fin de course de l'insert 12 en position déployée.

L'insert 12 repousse la matière à la manière d'un poinçon (sans toutefois la perforer) jusqu'à atteindre sa position déployée, la poignée étant alors formée en creux dans le corps 4 du récipient 2 (FIG.7 et FIG.9).

En même temps que l'insert 12 est déplacé vers sa position déployée, la pression dans le récipient 2 est augmentée (typiquement jusqu'à une valeur comprise entre 20 et 40 bars environ) pour améliorer la prise d'empreinte du récipient 2 contre la paroi 6 latérale et le fond 8 de moule. La paroi 6 latérale et le fond 8 de moule étant régulés thermiquement, le maintien d'un contact intime de la matière contre ceux-ci favorise le refroidissement (ou, dans le cas d'une thermofixation, la chauffe) du récipient 2, au bénéfice de sa rigidité mécanique.

Après une temporisation (de quelques dixièmes de secondes), le récipient est dépressurisé, le moule 5 est ouvert et le récipient 2 est évacué du moule 5.

L'insert 12 est replacé dans sa position rétractée avant ou après l'ouverture du moule 5. A cet effet, le fluide sous pression est injecté, via le conduit 50 secondaire et la rainure 25 avant, dans la demi-chambre 22B avant, cependant que le fluide présent dans la demi-chambre 22A arrière est simultanément évacué, via la rainure 23 arrière, par le conduit 46 primaire. Sous la différence de pression entre la demi-chambre 22B avant et la demi-chambre 22A arrière, le piston 17 est, avec l'insert 12 dont il est solidaire, déplacé transversalement vers l'extérieur du moule 6, jusqu'à venir buter, par l'intermédiaire du silentbloc 76 arrière, contre la paroi 18 de fond qui détermine la fin de course de l'insert 12 en position rétractée.

Par comparaison avec un dispositif de boxage ordinaire dans lequel le piston 17 serait directement monté dans un évidement pratiqué dans le moule 5, la présence de la chemise 14 rapportée, qui fait office de pièce d'usure, limite (voire supprime) l'usure de la paroi 6 latérale du moule 5, au bénéfice de la fiabilité de l'unité 1 de moulage.

Par ailleurs, l'intégration du circuit 45 fluidique dans le moule 5, et plus précisément la réalisation des conduits 46, 50 d'alimentation dans la paroi 6 latérale du moule 5, avec des branchements réalisés sur la face 48 supérieure de celui-ci, limite l'encombrement transversal du moule 5 au bénéfice de la compacité générale de l'unité 1 de moulage.

La séparation de l'évidement 15 du logement 9 par la cloison 42 et le montage de l'insert 12 par l'intérieur du demi-moule 5A (ou 5B) permettent de réaliser une bonne étanchéité des demi-chambres 22A, 22B, au bénéfice de l'efficacité du dispositif 11 de boxage, et donc d'améliorer la qualité du récipient 2.

La forme asymétrique (ici ovale) de l'insert 12 et de la chemise 14 évite la rotation de l'insert 12, au bénéfice d'une bonne prise d'empreinte de la réserve 3 en creux. La distribution préférentielle uniforme des ouvertures 24 (et des échancrures 26) permet d'assurer une bonne répartition de la pression dans la demi-chambre 22A arrière (respectivement dans la demi-chambre 22B avant), au bénéfice de la précision de guidage de l'insert 12 et d'une bonne prise d'empreinte de la réserve 3 en creux.

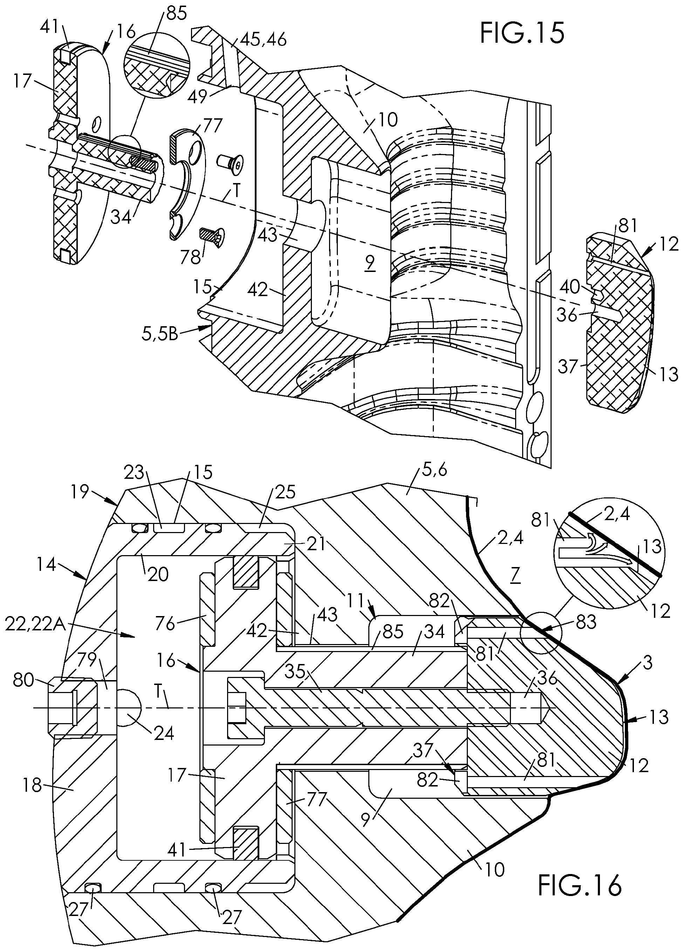

On a représenté sur les FIG.15 à FIG.18 une variante de réalisation de l'unité 1 de moulage.

Cette variante reprend toutes les caractéristiques de l'unité 1 de moulage décrite ci-dessus, à l'exception des caractéristiques supplémentaires ou modifiées suivantes.

Premièrement, l'insert **12** est pourvu d'au moins un canal **81** qui s'étend d'une extrémité **82** arrière, par laquelle il débouche dans le logement **9,** à une extrémité **83** avant par laquelle il débouche sur la face **13** frontale.

Selon un premier mode de réalisation, le (ou chaque) canal **81** peut être creusé dans le pourtour de l'insert **12,** sous forme de rainure (ou cannelure). Selon un mode préféré de réalisation illustré sur les **FIG.15** à **FIG.18,** le (ou chaque) canal **81** est percé dans la masse de l'insert **12.**

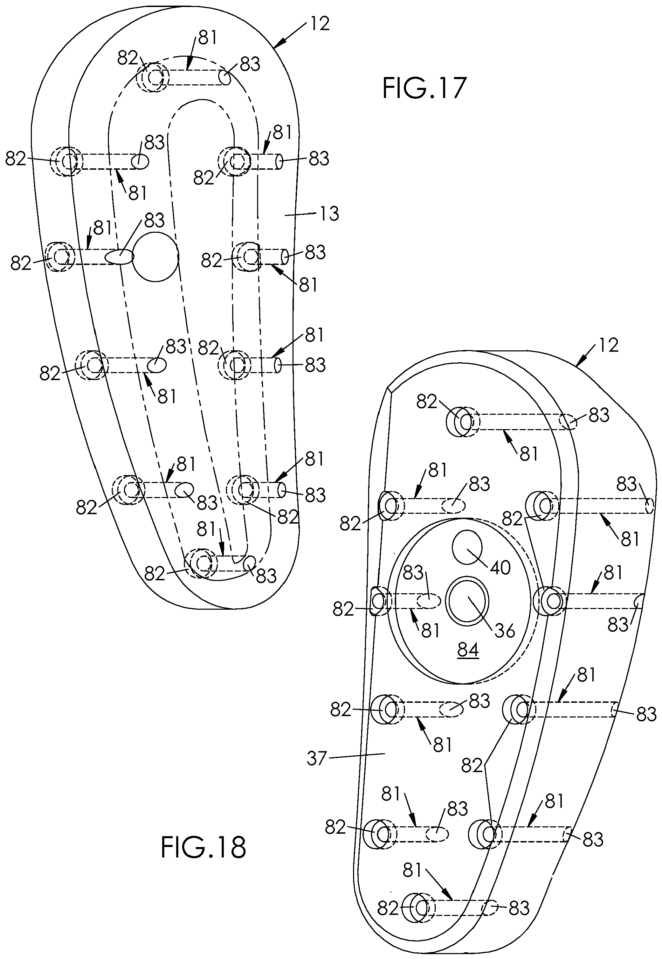

Dans ce cas, et comme cela est bien visible sur la **FIG.18,** le (ou chaque) canal **81** débouche sur la face **37** arrière de l'insert **12.**

Selon un mode de réalisation illustré sur les **FIG.17** et **FIG.18,** l'insert comprend une pluralité de canaux **81.** Ces canaux **81** sont avantageusement répartis autour de la tige **34** lorsque celle-ci est fixée sur l'insert **12.** Dans l'exemple illustré, où l'insert **12** est pourvu d'un lamage **84** dans lequel est emboîtée la tige **34,** on voit que les canaux **81** sont répartis autour de ce lamage **84.**

Deuxièmement, la demi-chambre **22B** avant est en communication fluidique avec le logement **9.**

A cet effet, la tige **34** est cannelée, c'est-à-dire qu'elle est pourvue de cannelures **85** pratiquées dans sa face externe parallèlement à son axe (parallèlement à l'axe **T**).

Ces cannelures **85** facilitent la communication fluidique entre la demi-chambre **22B** avant et le logement **9.**

Ces dispositions permettent de réaliser, via la demi-chambre **22B** avant, les cannelures **85,** le logement **9** et le canal (ou les canaux) **81,** une circulation de fluide (c'est-à-dire d'air si le fluide employé est de l'air) qui :

- favorise le refroidissement (ou la régulation thermique) de l'insert **12,**
- facilite le refroidissement de la matière du récipient **2** ainsi que son décollement de la face **13** frontale de l'insert **12** lors du retrait de celui-ci.

Cette circulation de fluide est réalisée lors de l'injection de fluide dans la demi-chambre **22B** avant commandant le mouvement de retrait du piston **17** (et donc de l'insert **12**) : une partie du fluide injecté fuit dans le logement **9** via les cannelures **85** et s'introduit dans le canal (les canaux) **81** par l'extrémité **82** arrière pour déboucher sur la face **13** frontale par l'extrémité **83** avant, comme illustré par les flèches dans le médaillon de détail de la **FIG.16.**

En limitant l'échauffement de l'insert **12,** alors même que la paroi **6** latérale du moule **5** est refroidie, on évite, d'une part, la montée de la température de l'insert au-dessus de la température de transition vitreuse (Tg) de la matière thermoplastique constitutive du récipient et, d'autre part, une dilatation de l'insert **12** qui empêcherait son bon coulissement dans le logement **9.** La lame d'air créée entre la face **13** frontale de l'insert **12** et le récipient **2** permet de préserver la forme de la réserve **3** en creux formée dans le récipient **2** par l'insert **12** dans sa position déployée.

Plus précisément, l'injection de fluide à basse pression dans la demi-chambre **22B** avant (et donc dans le logement **9**) est réalisée avant que l'injection de fluide à haute pression dans la demi-chambre **22A** arrière ne soit stoppée. La circulation de fluide sur la face **13** frontale de l'insert **12** débute donc avant le retrait de celui-ci. L'air circule par conséquent entre le récipient **2** soufflé et l'insert **12,** et assure un refroidissement de celui-ci.

La pression dans le récipient **2** est ensuite relâchée, puis la pression dans la demi-chambre **22A** arrière est également relâchée. La pression dans la demi-chambre **22B** avant étant maintenue, l'insert **12** est déplacé depuis sa position déployée vers sa position rétractée et ensuite, la pression dans la demi-chambre **22B** avant est relâchée.

Cette architecture, et le mode de fonctionnement qui vient d'être décrit, permet de simplifier la structure du moule puisque les conduits de pressurisation de la demi-chambre **22B** avant sont mis à profit pour assurer le refroidissement de l'insert **12,** ce qui évite de recourir à des dispositions dédiées (par ex. un conduit spécifique d'amenée de fluide caloporteur). Par ailleurs, comme le récipient **2** est mis à profit pour générer un effet de mur de guidage des flux d'air qui se répartissent en lame léchant la face **13** frontale, il en résulte une bonne efficacité du refroidissement. De la sorte, la température de l'insert **12** peut être maintenue constamment au-dessous de la température de transition vitreuse de la matière du récipient **2.**

## Revendications

1. Unité (**1**) de moulage pour le formage d'un récipient (**2**) muni d'une réserve (**3**) en creux vers l'intérieur du récipient (**2**), cette unité (**1**) de formage comprenant :

   - un moule (**5**) muni d'une paroi (**6**) latérale définissant une cavité (**7**) à l'empreinte d'au moins une partie du récipient (**2**) et qui s'étend suivant un axe (**X**) principal définissant une direction verticale, cette paroi (**6**) latérale étant pourvue d'un logement (**9**) débouchant dans la cavité (**7**) ;
   - un dispositif (**11**) de boxage comprenant :

◦ un insert (**12**) monté en translation par rapport à la paroi (**6**) latérale suivant un axe (**T**) transversal entre une position rétractée dans laquelle l'insert (**12**) est au moins en partie escamoté dans le logement (**9**), et une position déployée dans laquelle l'insert (**12**) fait au moins en partie saillie dans la cavité (**7**) hors du logement (**9**),

◦ un actionneur (**16**) solidaire de l'insert (**12**) et muni d'un piston (**17**) ;

cette unité (**1**) de moulage étant **caractérisée en ce que** :

- le logement (**9**) est formé en creux dans une excroissance (**10**) formant une saillie vers l'intérieur de la cavité (**7**),
- en position déployée, l'insert (**12**) forme, au-delà de l'excroissance (**10**), une saillie dont l'extension transversale, notée E, est inférieure ou égale à 85% de l'extension transversale cumulée, notée F, de l'excroissance (**10**) et de l'insert (**12**) :

$$E \leq 0{,}85 \cdot F$$

**2.** Unité (**1**) de moulage selon la revendication 1, **caractérisée en ce que** la course, notée H, de l'insert (**1**), mesurée entre sa position rétractée et sa position déployée, est inférieure ou égale à 20 mm :

$$H \leq 20 \ mm$$

**3.** Unité (**1**) de moulage selon la revendication 1 ou la revendication 2, **caractérisée en ce que** l'extension E transversale de la saillie formée par l'insert (**12**) au-delà de l'excroissance (**10**) est supérieure ou égale à 30% de l'extension F transversale cumulée de l'excroissance (**10**) et de l'insert (**12**) :

$$E \geq 0{,}3 \cdot F$$

**4.** Unité (**1**) de moulage selon l'une des revendications 1 à 3, **caractérisée en ce que** la longueur de corde, notée B, mesurée dans un plan horizontal contenant l'axe (**T**) transversal, de la saillie formée par l'insert (**12**) en position déployée, est inférieure ou égale à 80% de la longueur de corde cumulée, notée A, de l'excroissance (**10**) et de la saillie formée par l'insert (**12**) en position déployée :

$$B \leq 0{,}8 \cdot A$$

**5.** Unité (**1**) de moulage selon l'une des revendications 1 à 4, **caractérisée en ce que** la longueur de corde, notée B, mesurée dans un plan horizontal contenant l'axe (**T**) transversal, de la saillie formée par l'insert (**12**) en position déployée, est supérieure ou égale à 35% de la longueur A de corde cumulée de l'excroissance (**10**) et de la saillie formée par l'insert (**12**) en position déployée :

$$B \geq 0{,}35 \cdot A$$

**6.** Unité (**1**) de moulage selon la revendication 4 ou la revendication 5, **caractérisée en ce que** l'insert (**12**) présente une largeur C, mesurée horizontalement, dont le rapport à la longueur de corde B est inférieur ou égal à 2,3 :

$$B \leq 2{,}3 \cdot C$$

**7.** Unité (**1**) de moulage selon l'une des revendications 4 à 6, **caractérisée en ce que** l'insert (**12**) présente une largeur C, mesurée horizontalement, dont le rapport à la longueur de corde B est supérieur ou égal à 1,3 :

$$B \geq 1{,}3 \cdot C$$

**8.** Unité (**1**) de moulage selon l'une des revendications 4 à 7, **caractérisée en ce que** le rapport entre la longueur *B* de corde de la saillie formée par l'insert (**12**) en position déployée et son extension *E* transversale est inférieur ou égal à 3,5 :

$$B \leq 3{,}5 \cdot E$$

**9.** Unité (**1**) de moulage l'une des revendications 4 à 8, **caractérisée en ce que** le rapport entre la longueur *B* de corde de la saillie formée par l'insert (**12**) en position déployée et son extension *E* transversale est supérieur ou égal à 2,2 :

$$B \geq 2{,}2 \cdot E$$

**10.** Unité (**1**) de moulage selon l'une des revendications 4 à 9, **caractérisée en ce que** la longueur *B* de corde de la saillie formée par l'insert (**12**) en position déployée est inférieure ou égale à 75 mm :

$$B \leq 75 \ mm$$

**11.** Unité (**1**) de moulage selon l'une des revendications 4 à 10, **caractérisée en ce que** la longueur *B* de corde de la saillie formée par l'insert (**12**) en position déployée est supérieure ou égale à 50 mm :

$$B \geq 50 \ mm$$

**12.** Unité (**1**) de moulage selon l'une des revendications précédentes, **caractérisée en ce que** le rapport entre la longueur de corde cumulée, notée *A,* mesurée dans un plan horizontal contenant l'axe (**T**) transversal, de l'excroissance (**10**) et de la saillie formée par l'insert (**12**) en position déployée et l'extension transversale cumulée, notée *F,* de l'excroissance (**10**) et de l'insert (**12**) en position déployée est inférieur ou égal à 3,3 :

$$A \leq 3{,}3 \cdot F$$

**13.** Unité (**1**) de moulage selon l'une des revendications précédentes, **caractérisée en ce que** le rapport entre la longueur de corde cumulée, notée *A,* mesurée dans un plan horizontal contenant l'axe (**T**) transversal, de l'excroissance (**10**) et de la saillie formée par l'insert (**12**) en position déployée et l'extension transversale cumulée, notée *F,* de l'excroissance (**10**) et de l'insert (**12**) en position déployée est supérieur ou égal à 2 :

$$A \geq 2 \cdot F$$

**14.** Unité (1) de moulage selon l'une des revendications précédentes, **caractérisée en ce que** l'extension *E* transversale de la saillie formée par l'insert (**12**) au-delà de l'excroissance (**10**) est inférieure ou égale à 35 mm :

$$E \leq 35 \ mm$$

**15.** Unité (**1**) de moulage selon l'une des revendications précédentes, **caractérisée en ce que** l'extension *E* transversale de la saillie formée par l'insert (**12**) au-delà de l'excroissance (**10**) est supérieure ou égale à 10 mm :

$$E \geq 10 \ mm$$

**16.** Unité (**1**) de moulage selon l'une des revendications précédentes, **caractérisée en ce que**, compte tenu d'un décalage, noté *I*, entre l'axe (**X**) principal et l'axe (**T**) transversal, l'extension *E* transversale est telle que :

$$E \leq 45\,mm - I$$

**Patentansprüche**

**1.** Formeinheit (1) zum Formen eines Behälters (2), der mit einer zum Inneren des Behälters (2) hin hohlen Aussparung (3) versehen ist, wobei diese Formeinheit (1) umfasst:

- ein Formwerkzeug (5), das mit einer Seitenwand (6) ausgestattet ist, die eine Kavität (7) mit dem Formnest mindestens eines Teils des Behälters (2) definiert und sich entlang einer Hauptachse (X), die eine vertikale Richtung definiert, erstreckt, wobei diese Seitenwand (6) mit einer Aufnahme (9) versehen ist, die in die Kavität (7) mündet;
- ein Boxingvorrichtung (11), umfassend:

o einen Einsatz (12), der in Bezug auf die Seitenwand (6) entlang einer Querachse (T) zwischen einer zurückgezogenen Position, in welcher der Einsatz (12) zumindest teilweise in der Aufnahme (9) versenkt ist, und einer ausgefahren Position, in welcher der Einsatz (12) zumindest teilweise aus der Aufnahme (9) heraus in die Kavität (7) vorspringt, verschiebbar gelagert ist,
o ein Stellorgan (16), das fest mit dem Einsatz (12) verbunden ist und mit einem Kolben (17) versehen ist;

wobei diese Formeinheit (1) **dadurch gekennzeichnet ist, dass**:

- die Aufnahme (9) hohl in einer Ausstülpung (10) gebildet ist, die einen Vorsprung zum Innenraum der Kavität (7) hin bildet,
- der Einsatz (12) in der ausgefahrenen Position über die Ausstülpung (10) hinaus einen Vorsprung bildet, dessen Querausdehnung, mit E bezeichnet, kleiner als oder gleich 85 % der kumulierten Querausdehnung, mit F bezeichnet, der Ausstülpung (10) und des Einsatzes (12) ist:

$$E \leq 0,85 \cdot F$$

**2.** Formeinheit (1) nach Anspruch 1, **dadurch gekennzeichnet, dass** der Hub, mit H bezeichnet, des Einsatzes (1), gemessen zwischen seiner zurückgezogenen Position und seiner ausgefahrenen Position, kleiner als oder gleich 20 mm ist:

$$H \leq 20\ mm$$

**3.** Formeinheit (1) nach Anspruch 1 oder Anspruch 2, **dadurch gekennzeichnet, dass** die Querausdehnung E des vom Einsatz (12) über die Ausstülpung (10) hinaus gebildeten Vorsprungs größer als oder gleich 30 % der kumulierten Querausdehnung F der Ausstülpung (10) und des Einsatzes (12) ist:

$$E \geq 0,3 \cdot F$$

**4.** Formeinheit (1) nach einem der Ansprüche 1 bis 3, **dadurch gekennzeichnet, dass** die Sehnenlänge, mit B bezeichnet, gemessen in einer die Querachse (T) enthaltenden horizontalen Ebene, des vom Einsatz (12) in der ausgefahrenen Position gebildeten Vorsprungs kleiner als oder gleich 80 % der kumulierten Sehnenlänge, mit A bezeichnet, der Ausstülpung (10) und des vom Einsatz (12) in der ausgefahrenen Position gebildeten Vorsprungs ist:

$$B \leq 0,8 \cdot A$$

**5.** Formeinheit (1) nach einem der Ansprüche 1 bis 4, **dadurch gekennzeichnet, dass** die Sehnenlänge, mit B bezeichnet, gemessen in einer die Querachse (T) enthaltenden horizontalen Ebene, des vom Einsatz (12) in der ausgefahrenen Position gebildeten Vorsprungs größer als oder gleich 35 % der kumulierten Sehnenlänge A der Ausstülpung (10) und des vom Einsatz (12) in der ausgefahrenen Position gebildeten Vorsprungs ist:

$$B \geq 0,35 \cdot A$$

6. Formeinheit (1) nach Anspruch 4 oder Anspruch 5, **dadurch gekennzeichnet, dass** der Einsatz (12) eine Breite C, horizontal gemessen, aufweist, deren Verhältnis zur Sehnenlänge B kleiner als oder gleich 2,3 ist:

$$B \leq 2,3 \cdot C$$

7. Formeinheit (1) nach einem der Ansprüche 4 bis 6, **dadurch gekennzeichnet, dass** der Einsatz (12) eine Breite C, horizontal gemessen, aufweist, deren Verhältnis zur Sehnenlänge B größer als oder gleich 1,3 ist:

$$B \geq 1,3 \cdot C$$

8. Formeinheit (1) nach einem der Ansprüche 4 bis 7, **dadurch gekennzeichnet, dass** das Verhältnis zwischen der Sehnenlänge B des vom Einsatz (12) in der ausgefahrenen Position gebildeten Vorsprungs und seiner Querausdehnung E kleiner als oder gleich 3,5 ist:

$$B \leq 3,5 \cdot E$$

9. Formeinheit (1) nach einem der Ansprüche 4 bis 8, **dadurch gekennzeichnet, dass** das Verhältnis zwischen der Sehnenlänge B des vom Einsatz (12) in der ausgefahrenen Position gebildeten Vorsprungs und seiner Querausdehnung E größer als oder gleich 2,2 ist:

$$B \geq 2,2 \cdot E$$

10. Formeinheit (1) nach einem der Ansprüche 4 bis 9, **dadurch gekennzeichnet, dass** die Sehnenlänge B des vom Einsatz (12) in der ausgefahrenen Position gebildeten Vorsprungs kleiner als oder gleich 75 mm ist:

$$B \leq 75 \; mm$$

11. Formeinheit (1) nach einem der Ansprüche 4 bis 10, **dadurch gekennzeichnet, dass** die Sehnenlänge B des vom Einsatz (12) in der ausgefahrenen Position gebildeten Vorsprungs größer als oder gleich 50 mm ist:

$$B \geq 50 \; mm$$

12. Formeinheit (1) nach einem der vorhergehenden Ansprüche, **dadurch gekennzeichnet, dass** das Verhältnis zwischen der kumulierten Sehnenlänge, mit A bezeichnet, gemessen in einer die Querachse (T) enthaltenden horizontalen Ebene, der Ausstülpung (10) und des vom Einsatz (12) in der ausgefahrenen Position gebildeten Vorsprungs und der kumulierten Querausdehnung, mit F bezeichnet, der Ausstülpung (10) und des Einsatzes (12) in der ausgefahrenen Position kleiner als oder gleich 3,3 ist:

$$A \leq 3,3 \cdot F$$

13. Formeinheit (1) nach einem der vorhergehenden Ansprüche, **dadurch gekennzeichnet, dass** das Verhältnis zwischen der kumulierten Sehnenlänge, mit A bezeichnet, gemessen in einer die Querachse (T) enthaltenden horizontalen Ebene, der Ausstülpung (10) und des vom Einsatz (12) in der ausgefahrenen Position gebildeten Vorsprungs und der kumulierten Querausdehnung, mit F bezeichnet, der Ausstülpung (10) und des Einsatzes (12) in der ausgefahrenen Position größer als oder gleich 2 ist:

17

$$A \geq 2 \cdot F$$

**14.** Formeinheit (1) nach einem der vorhergehenden Ansprüche, **dadurch gekennzeichnet, dass** die Querausdehnung E des vom Einsatz (12) über die Ausstülpung (10) hinaus gebildeten Vorsprungs kleiner als oder gleich 35 mm ist:

$$E \leq 35 \ mm$$

**15.** Formeinheit (1) nach einem der vorhergehenden Ansprüche, **dadurch gekennzeichnet, dass** die Querausdehnung E des vom Einsatz (12) über die Ausstülpung (10) hinaus gebildeten Vorsprungs größer als oder gleich 10 mm ist:

$$E \geq 10 \ mm$$

**16.** Formeinheit (1) nach einem der vorhergehenden Ansprüche, **dadurch gekennzeichnet, dass** unter Berücksichtigung eines Versatzes, mit I bezeichnet, zwischen der Hauptachse (X) und der Querachse (T) die Querausdehnung E derart ist, dass:

$$E \leq 45 \ mm - I$$

**Claims**

**1.** Moulding unit (**1**) for forming a container (**2**) provided with a reserve (**3**) hollowed out toward the interior of the container (**2**), this forming unit (**1**) comprising:

- a mould (**5**) provided with a lateral wall (**6**) defining a cavity (**7**) with the die of at least a part of the container (**2**) and which extends along a main axis (**X**) defining a vertical direction, this lateral wall (**6**) being provided with a recess (**9**) emerging in the cavity (**7**);
- a boxing device (**11**) comprising:

  ◦ an insert (**12**) mounted in translation relative to the lateral wall (**6**) along a transverse axis (**T**) between a retracted position in which the insert (**12**) is at least partly retracted in the recess (**9**), and a deployed position in which the insert (**12**) at least partly protrudes into the cavity (**7**) out of the recess (**9**),
  ◦ an actuator (**16**) secured to the insert (**12**) and provided with a piston (**17**);

this moulding unit (**1**) being **characterized in that**:

- the recess (**9**) is formed hollowed out in a protuberance (**10**) forming a protrusion toward the interior of the cavity (**7**),
- in deployed position, the insert (**12**) forms, beyond the protuberance (**10**), a protrusion whose transverse extension, denoted *E,* is less than or equal to 85% of the aggregate transverse extension, denoted *F,* of the protuberance (**10**) and of the insert (**12**):

$$E \leq 0.85 \cdot F$$

**2.** Moulding unit (**1**) according to Claim 1, **characterized in that** the travel, denoted *H*, of the insert (**1**), measured between its retracted position and its deployed position, is less than or equal to 20 mm:

$$H \leq 20 \ mm$$

**3.** Moulding unit (**1**) according to Claim 1 or Claim 2, **characterized in that** the transverse extension E of the protrusion formed by the insert (**12**) beyond the protuberance (**10**) is greater than or equal to 30% of the aggregate transverse extension *F* of the protuberance (**10**) and of the insert (**12**):

$$E \geq 0.3 \cdot F$$

4. Moulding unit (**1**) according to one of Claims 1 to 3, **characterized in that** the cord length, denoted *B,* measured in a horizontal plane containing the transverse axis (**T**), of the protrusion formed by the insert (**12**) in deployed position, is less than or equal to 80% of the aggregate cord length, denoted *A,* of the protuberance (**10**) and of the protrusion formed by the insert (**12**) in deployed position:

$$B \leq 0.8 \cdot A$$

5. Moulding unit (**1**) according to one of Claims 1 to 4, **characterized in that** the cord length, denoted *B,* measured in a horizontal plane containing the transverse axis (**T**), of the protrusion formed by the insert (**12**) in deployed position, is greater than or equal to 35% of the aggregate cord length *A,* of the protuberance (**10**) and of the protrusion formed by the insert (**12**) in deployed position:

$$B \geq 0.35 \cdot A$$

6. Moulding unit (**1**) according to Claim 4 or Claim 5, **characterized in that** the insert (**12**) has a width *C,* measured horizontally, whose ratio to the cord length *B* is less than or equal to 2.3:

$$B \leq 2.3 \cdot C$$

7. Moulding unit (**1**) according to one of Claims 4 to 6, **characterized in that** the insert (**12**) has a width *C,* measured horizontally, whose ratio to the cord length *B* is greater than or equal to 1.3:

$$B \geq 1.3 \cdot C$$

8. Moulding unit (**1**) according to one of Claims 4 to 7, **characterized in that** the ratio between the cord length *B* of the protrusion formed by the insert (**12**) in deployed position and its transverse extension *E* is less than or equal to 3.5:

$$B \leq 3.5 \cdot E$$

9. Moulding unit (**1**) according to one of Claims 4 to 8, **characterized in that** the ratio between the cord length *B* of the protrusion formed by the insert (**12**) in deployed position and its transverse extension E is greater than or equal to 2.2:

$$B \geq 2.2 \cdot E$$

10. Moulding unit (**1**) according to one of Claims 4 to 9, **characterized in that** the cord length *B* of the protrusion formed by the insert (**12**) in deployed position is less than or equal to 75 mm:

$$B \leq 75 \ mm$$

11. Moulding unit (**1**) according to one of Claims 4 to 10, **characterized in that** the cord length *B* of the protrusion formed by the insert (**12**) in deployed position is greater than or equal to 50 mm:

$$B \geq 50 \ mm$$

**12.** Moulding unit (**1**) according to one of the preceding claims, **characterized in that** the ratio been the aggregate cord length, denoted *A,* measured in a horizontal plane containing the transverse axis (**T**), of the protuberance (**10**) and of the protrusion formed by the insert (**12**) in deployed position and the aggregate transverse extension, denoted *F,* of the protuberance (**10**) and of the insert (**12**) in deployed position is less than or equal to 3.3:

$$A \leq 3.3 \cdot F$$

**13.** Moulding unit (**1**) according to one of the preceding claims, **characterized in that** the ratio been the aggregate cord length, denoted *A,* measured in a horizontal plane containing the transverse axis (**T**), of the protuberance (**10**) and of the protrusion formed by the insert (**12**) in deployed position and the aggregate transverse extension, denoted *F,* of the protuberance (**10**) and of the insert (**12**) in deployed position is greater than or equal to 2:

$$A \geq 2 \cdot F$$

**14.** Moulding unit (**1**) according to one of the preceding claims, **characterized in that** the transverse extension *E* of the protrusion formed by the insert (**12**) beyond the protuberance (**10**) is less than or equal to 35 mm:

$$E \leq 35 \ mm$$

**15.** Moulding unit (**1**) according to one of the preceding claims, **characterized in that** the transverse extension *E* of the protrusion formed by the insert (**12**) beyond the protuberance (**10**) is greater than or equal to 10 mm:

$$E \geq 10 \ mm$$

**16.** Moulding unit (**1**) according to one of the preceding claims, **characterized in that**, given an offset, denoted *I*, between the main axis (**X**) and the transverse axis (**T**), the transverse extension *E* is such that:

$$E \leq 45 \ mm - I$$

FIG.1

FIG.2

FIG.3

FIG.4

FIG.5

FIG.6

FIG.7

EP 3 272 496 B1

FIG.8

FIG.9

FIG.10

FIG.11

FIG.12

FIG.13

FIG.14

EP 3 272 496 B1

30

FIG.15

FIG.16

FIG.17

FIG.18

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010063900 A